# EUROPEAN PATENT APPLICATION

(11) **EP 4 711 802 A1**
(43) Date of publication of application: **18.03.2026**
(21) Application number: 24200112.1
(22) Date of filing: 12.09.2024
(51) Int. Cl.: G01S 7/02, G01S 13/34, G01S 13/931

(54) **RADAR SENSOR AND A METHOD OF OPERATION OF A RADAR SENSOR**

(71) Applicant: Infineon Technologies AG, 85579 Neubiberg (DE)
(72) Inventor: BELITZER, Alexander, 81825 München (DE)
(74) Representative: Infineon Patent Department

(57) **Abstract**

A method for operating a radar sensor in a vehicle, the radar sensor comprising a radar transceiver operating in an operating frequency range. The method comprises generating within the radar sensor an information related to an orientation of the radar sensor and determining an orientation of a transmission of the radar transceiver based on the information related to the orientation of the radar sensor. Further, the method comprises selecting a frequency sub-band of the operating frequency range of the radar transceiver depending on the orientation of the radar transceiver for transmitting radar signals

## Description

### TECHNICAL FIELD

The present disclosure relates to a radar sensor and in particular, to a radar sensor suitable for automotive applications. The present disclosure further relates to a method of operation of a radar sensor in a vehicle.

### BACKGROUND

Radar sensor systems in a vehicle are used to determine a distance and a position of objects, relative to the radar sensor's position which can be used for Advanced Driver Assistance Systems (ADAS), Emergency Braking (EB), Automatic Cruise Control (ACC) functions, and Autonomous Drive (AD) etc.. The radar sensors of vehicles may interfere with each other on a road and thus provide incorrect distance and position of objects.

One way to overcome the interference between radar sensors of different vehicles on the road is to assign different frequencies to the radar sensors of the vehicles depending upon a moving direction of the respective vehicle. The vehicle can be located using a global positioning system (GPS) or a global navigation satellite system (GNSS) and a moving direction of the vehicle can be determined using a navigation system. The GPS/GNSS and the navigation system are connected to a central control unit which processes the information received from GPS/GNSS and the navigation system and assigns different frequencies to the radar sensors. An information related to the moving direction of the vehicle has to pass through many systems i.e. GPS/GNSS, the navigation system and the central control unit. Therefore, a time interval between the information is processed by the central control unit and different frequencies are assigned to the radar sensors by the central control unit becomes crucial. A significant delay in the processing of the information and assigning different frequencies may prohibit the timely usage of the information and the information may become insignificant. Further, the GPS/GNSS and the navigation system are not directly connected to the radar sensors instead via the central control unit. The failure of the central control unit may lead to malfunction of all the radar sensors connected to it.

Accordingly, it is an object of the present invention to provide an improved concept for operating a radar sensor in a vehicle.

### SUMMARY

The present vehicle relates to a method for operating a radar sensor in a vehicle. The radar sensor comprises a radar transceiver operating in an operating frequency range. The method comprising:
generating within the radar sensor an information related to an orientation of the radar sensor,
determining an orientation of a transmission of the radar transceiver based on the information related to the orientation of the radar sensor,
selecting a frequency sub-band of the operating frequency range of the radar transceiver depending on the orientation of the radar transceiver for transmitting radar signals.

The present disclosure further relates to a radar sensor for a vehicle. The radar sensor comprises a radar transceiver, a sensor and a processing circuit. The radar transceiver operates in an operating frequency range. The sensor is configured to determine an information related to an orientation of the radar sensor. The processing circuit is configured to determine an orientation of a transmission of the radar transceiver based on the information related to the orientation of the radar sensor and to assign a frequency sub-band of the operating frequency range of the radar transceiver to the radar transceiver based on the information related to the orientation of the transmission of the radar sensor received from the sensor. The radar sensor further comprises a printed circuit board mechanically and electrically coupled to the radar transceiver, the sensor and the processing circuit.

Those skilled in the art will recognize additional features and advantages upon reading the following detailed description, and upon viewing the accompanying drawings.

### BRIEF DESCRIPTION OF THE DRAWINGS

The present disclosure is illustrated by way of example, and not by way of limitation, in the figures of the accompanying drawings in which like reference numerals refer to similar or identical elements. The elements of the drawings are not necessarily to scale relative to each other. The features of the various illustrated examples can be combined unless they exclude each other.
Figure 1 illustrates an example of a conventional method for operating a radar sensor in a vehicle.
Figure 2 illustrates a vehicle comprising radar sensors, wherein the radar sensors transmit RF signals dependent on a transmission orientation of the respective radar sensor.
Figure 3 illustrates one of the radar sensors of Figure 2 in a reference system.
Figure 4 illustrates an example of a radar sensor having a radar transceiver, a processing circuit and a compass sensor integrated in a same semiconductor package.
Figure 5 illustrates another example of a radar sensor comprising a compass sensor arranged outside of a semiconductor package comprising a radar transceiver and a processing circuit.
Figure 6 illustrates a radar sensor comprising a compass sensor and a power management chip integrated in a same semiconductor package.
Figure 7 illustrates a flowchart of a method for operating a radar sensor in a vehicle.

### DETAILED DESCRIPTION

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and sensor s. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and sensor s. Furthermore, all statements herein providing principles, aspects, and embodiments of the invention, as well as specific examples thereof, are intended to encompass equivalents thereof.

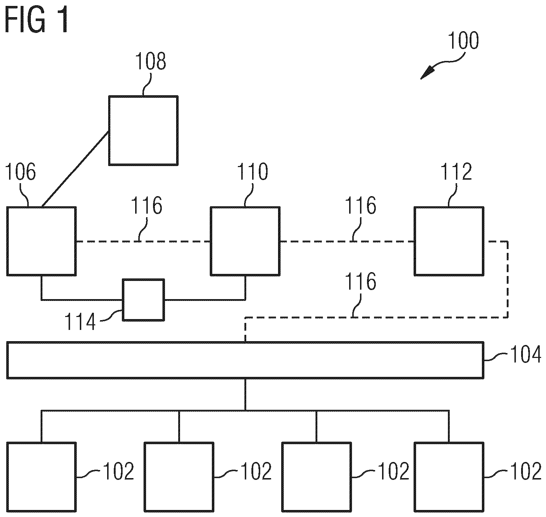

Figure 1 shows as a block diagram of a conventional example of an arrangement 100 of electronic components in a vehicle including radar sensors 102. The arrangement 100 determines a moving direction of the vehicle using one or more separate sub-systems mounted on the vehicle and then assigns different frequencies to each radar sensor based on the moving direction of the vehicle.

The radar sensors 102 are coupled to a central control unit 104 which determines the moving direction the vehicle. The moving direction of the vehicle may include a location and a route of the vehicle. The determination of the moving direction of the vehicle involves receiving an information from multiple sub-systems 106, 108, 110 and 112 and processing by the central control unit 104. One sub-system e.g., a location sub-system 106 may locate the vehicle. The location sub-system 106 may have a GPS/GNSS receiver and a localization circuit. The GPS/GNSS receiver receives a first GPS/GNSS signal from multiple satellites and the location circuit processes the first GPS/GNSS signal to determine coordinates of the vehicle e.g. a longitude and a latitude. The location sub-system 106 may have access to a vast database of a map data sub-system 108, which includes an information about the roads, highways etc. and can determine surroundings of the vehicle. Thus, the location sub-system 106 can determine a location of the vehicle and transmits the location of the vehicle to a navigation sub-system 110. The navigation sub-system 110 may have an accelerometer to determine an orientation of the vehicle. In some examples, the navigation sub-system 110 may have a Lidar sensor or camera to determine the obstacles in a vicinity of the vehicle. Based on the location, the orientation and the information of the surroundings of the vehicle, the navigation sub-system 110 determines the moving direction of the vehicle. An information from the location sub-system 106 and the navigation sub-system 110 is fused together by a sensor fusion system 112 and transmitted to the central control unit 104. The central control unit 104 assigns different frequencies to each radar sensor based on an information received from the sensor fusion system 112.

The first GPS/GNSS signal received from the satellites may interfere with the surroundings of the vehicle and thus, the location of the vehicle determined may not be accurate. A sensor 114 e.g., an ultrasonic sensor, a Lidar, a radar or an acoustic sensor etc., may transmit a second signal comprising an information related to interference of the surroundings to either the location sub-system 106 or the navigation sub-system 110. The location sub-system 106 or the navigation sub-system 110 may remove the interference from the first GPS/GNSS signals to accurately locate the vehicle.

In the arrangement 100, a time period between generating an information related to the moving direction of the vehicle and assigning different frequencies to each radar sensor is very crucial. The path involved in the transmittance of the information related to the moving direction of the vehicle from multiple sub-systems 106, 108, 110 and 112 to the central control unit 104 is shown by a dotted line 116. The sub-systems 106, 108, 110 and 112 are not directly connected to the radar sensors 102 instead to the central control unit 104. Consequently, the time-period between the information regarding the moving direction of the vehicle reaching the central control unit 104, the central control unit 104 processing the information and then assigning different frequencies to each radar sensor 102 may be significantly long which may prohibit timely usage of the information related to the moving direction of the vehicle or degrade the benefits of the operation of the arrangement 100 to avoid interference.

Embodiments described herein provide a new concept for operating a radar sensor in a vehicle. The radar sensor comprises a radar transceiver operating in an operating frequency range. The new concept is based on the determining of an orientation of the radar sensor within the radar sensor itself and then determining also within the radar sensor an orientation of a transmission of the radar transceiver based on the orientation of the radar sensor. After determining the orientation of the transmission of the radar transceiver, a frequency sub-band of the operating frequency range of the radar transceiver is assigned by the radar sensor to the radar transceiver for transmitting radar signals. In other words, the required sensing and processing for determining absolute orientation (for example with reference to a global earth reference system such as the earth rotation axis or the magnetic north pole direction) and assigning frequency sub-bands are performed all within the radar sensor itself. In view of the above, the radar sensor is autonomously determining the orientation information and assigning the frequency sub-bands based on the orientation information.

The new concept is achieved by the radar sensor having the radar transceiver, a sensor to determine an information related to an orientation of the radar sensor and a processing circuit. The processing circuit determines the orientation of the radar sensor and the orientation of the transmission of the radar transceiver using the sensor. Furthermore, the processing circuit assigns the frequency sub-band of the operating frequency range of the radar transceiver to the radar transceiver. As the orientation of the transmission of the radar transceiver is determined within the radar sensor, the frequency sub-band can be assigned to the radar transceiver instantaneously or without significant delays.

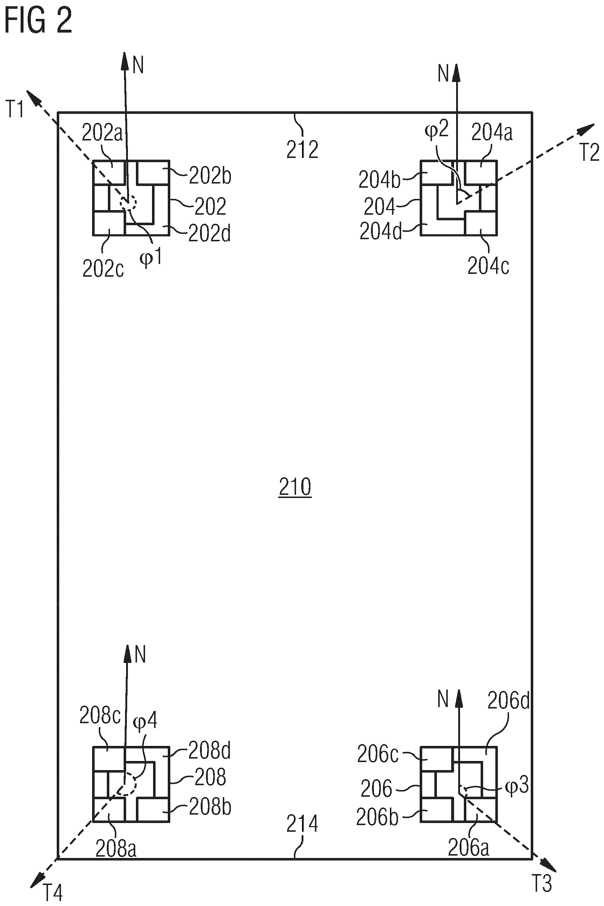

Figure 2 shows an arrangement of a plurality of radar sensors 202, 204, 206, 208 in a vehicle 210 according to one example. The radar sensors 202 and 204 are mounted on opposite ends of a front side 212 of the vehicle 200. The radar sensors 206 and 208 are mounted on opposite ends of a rear side 214 of the vehicle 210. Further, each radar sensor 202, 204, 206 and 208 has a radar transceiver 202a, 204a, 206a and 208a, a sensor 202b, 204b, 206b and 208b and a processing circuit 202c, 204c, 206c and 208c. Each of the radar transceiver 202a, 204a, 206a and 208a, the sensor 202b, 204b, 206b and 208b and the processing circuit 202c, 204c, 206c and 208c are integrated in a respective semiconductor package. Each semiconductor package is mounted on a corresponding printed circuit board 202d, 204d, 206d and 208d. The printed circuit boards 202d, 204d, 206d and 208d are separate to each other i.e. the radar sensors 202, 204, 206 and 208 operate independent of each other.

In one example, the radar sensor 202, 204, 206, 208 can be mounted at other locations than the front side 212 or the rear side 214 of the vehicle 210.

Each of the radar transceivers 202a, 204a, 206a and 208a is implemented for example as a radar MMIC semiconductor chip and is configured to transmit a frequency modulated continuous wave (FMCW) RF signal in an operating frequency range for example 76-81 GHz. The FMCW RF signal may include a plurality of chirps with each chirp having a start frequency and a stop frequency. Each of the radar transceivers 202a, 204a, 206a, 208a transmits, receives and processes the respective FMCW RF signal. In some examples, each of the radar transceivers 202, 204, 206 and 208 may utilize a predetermined bandwidth determined for the transmission of the RF signals.

In one example, each of the radar transceivers 202a, 204a, 206a, 208a is electrically coupled to the respective printed circuit board 202d, 204d, 206d, 208d for transferring the RF signals to an antenna provided on the respective printed circuit board 202d, 204d, 206d, 208d.

In one example, each of the radar transceivers 202a, 204a, 206a, 208a may have a first wireless element configured to transmit RF signals. In some examples, the first wireless transfer element may be an antenna integrated in the radar transceiver 202a, 204a, 206a, 208a and configured to transfer RF signals during the operation of the vehicle directly to the surrounding. In some examples, the first wireless transfer element may be a launcher integrated in the respective radar transceiver 202a, 204a, 206a, 208a and configured to wireless transfer RF signals during the operation of the vehicle to an air-filled waveguide antenna.

The processing circuit 202c, 204c, 206c, 208c may be a multiprocessor, a microcontroller, a digital signal processor capable of executing software instructions stored in a program e.g., a storage medium of the programing circuit 202c, 204c, 206c, 208c.

The sensor 202b, 204b, 206b, 208b may be a compass sensor such as a MEMS compass sensor or a magnetic sensor configured to determine or provide information regarding its orientation with respect to a reference system. The magnetic sensor may include a 3D magnetic sensor capable of measuring magnetic fields in three orthogonal directions, a Hall sensor or a magneto resistive sensor etc. The reference system may be a global geographical reference system comprising North, South, East and West directions or a system using a magnetic North direction and/or other magnetic directions such as a magnetic South direction as a reference orientation. The sensor 202b, 204b, 206b, 208b may determine its orientation with respect to a fixed direction e.g., the North direction N of the geographical system or a rotation axis of the earth.

Each radar transceiver 202a, 202a, 202a, 202a has a corresponding transmission indicated by an arrow T1, T2, T3, T4. The transmission is for example in the direction in which a radiation pattern of the RF signals contain a highest power or exhibits a greatest signal strength. The transmission T1, T2, T3, T4 of the radar transceiver 202a, 204a, 206a, 208a points away from the vehicle 210. The transmission T1, T2, T3, T4 of the radar transceiver 202a, 204a, 206a, 208a may be in the direction of a main transmission lobe of the radar transceiver 202a, 204a, 206a, 208a.

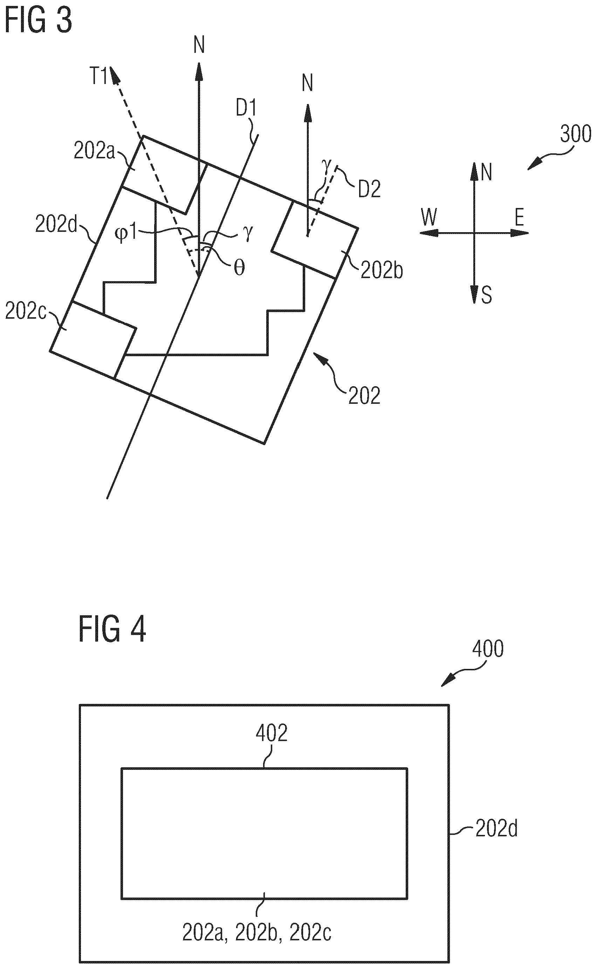

The transmissions T1, T2, T3 and T4 of the corresponding radar transceivers 202a, 204a, 206a and 208a may be oriented with respect to the North direction N by an angle *ϕ*1, *ϕ*2, *ϕ*3 and *ϕ*4 respectively. The determination of the angle *ϕ*1, *ϕ*2, *ϕ*3, *ϕ*4 is discussed in Figure 3. Based on the angle *ϕ*1, *ϕ*2, *ϕ*3, *ϕ*4, the processing circuits 202c, 204c, 206c and 208c assign the frequency sub-band to the respective radar transceivers 202a, 204a, 206a and 208a for transmitting RF signals.

The radar sensors 202, 204, 206 and 208 are mounted on different sides 212, 214 of the vehicle 210. Therefore, the transmission T1, T2, T3 and T4 are oriented differently with respect to the North direction N. Consequently, the assigned frequency sub-bands to each radar transceivers 202a, 204a, 206a and 208a will be different and thus, reducing the interference with radar sensors of other vehicles on the road. Furthermore, it is to be noted that no information on the mounting position on the vehicle 210 and orientation of the radar sensors 202, 204, 206 and 208 with respect to the vehicle 210 is required as the radar sensors 202, 204 206 and 208 determine the orientation on their own.

Figure 3 shows one of the radar sensor 202 of the plurality of radar sensors 202, 204, 206, 208 of Figure 2 randomly oriented with respect to the reference system 300. The radar sensor 202 may be aligned with respect to a first direction D1 that may be a line parallel to the printed circuit board 202d.The transmission T1 of the radar transceiver 202 is oriented by an angle (θ) with respect to the first direction D1 of the radar sensor 202. As the radar transceiver 202a is fixed on the printed circuit board 202d, the angle (θ) can be pre-determined and stored in the memory of the processing circuit 202c. Similarly, the sensor 202b is oriented in a second direction D2 and the second direction D2 may be oriented by an angle with respect to the first direction D1 of the radar transceiver 202a. As the sensor 202b is fixed on the printed circuit board, the angle can be pre-determined and stored in the memory of the processing circuit 202d. In Figure 3, the second direction D2 is parallel to the first direction D1 of the radar sensor 202. Therefore, the angle between the sensor 202b or the second direction D2 and radar transceiver 202a or the first direction D1 is 0°.

The sensor 202b can determine its orientation i.e. an angle (γ) with respect to the reference system 300 e.g. the North direction N and transmit an information related to the angle (γ) to the processing circuit 202c. As described herein, the angle between the sensor 202b and the first direction D1 of the radar sensor is 0. Therefore, the first direction D1 of the radar sensor 202 is also oriented by the angle (γ) with respect to the North direction N. Based on the pre-determined angle (θ) between the first direction D1 of the radar sensor 202 and the transmission T1 of the radar transceiver 202a and the determined angle (γ) between the first direction D1 of the radar sensor 202 and the North direction N, the processing circuit 202c can determine an orientation or an angle (*ϕ*1) between the transmission T1 of radar transceiver 202a and the North direction N. Based on the angle (*ϕ*1), the processing circuit 202c assigns the frequency sub-band to the radar transceiver 202a for transmitting FMCW RF signals. The relative angle *ϕ*1 = 0° implies that the transmission T1 of the radar transceiver 202a is aligned with the North direction N.

The processing circuit 202c may have a software or a program implemented in the memory of the processing circuit 202c. The software or the program can assign the frequency sub-band of the operating frequency range of the radar transceiver 202a depending on the orientation or the angle *ϕ*1 of the transmission T1 of the radar transceiver 202a with respect to the reference system 300. In other words, the radar sessor 202 can autonomously assign the frequency sub-band for transmitting RF signals.

Separately or in combination, the processing circuit 202c may have a look-up table stored in the memory of the processing circuit 202c. The look-up table may have an information related to the mapping of the frequency sub-band and the orientation of the transmission T1 of the radar transceiver 202a. Based on the look-up table, the processing circuit 202c may assign the frequency sub-band to the radar transceiver 202a.

In one example, the processing circuit 202c assigns the start frequency and the stop frequency of the RF signal to the radar transceiver 202a. In some examples, the processing circuit 202c may assign either the start frequency or the stop frequency. In some examples, the processing circuit 202c may assign a bandwidth between the start frequency and the stop frequency of the RF signal.

Referring now to Figure 2, the radar sensors 204, 206, 208 can also determine a respective angle *ϕ*2, *ϕ*3, *ϕ*4 between the respective transmission T2, T3, T4 and the North direction N of the reference system 300 as discussed in reference to Figure 3. The respective processing circuit 204c, 206c 208c can assign the frequency sub-band to the radar transceiver 204a, 206a, 208a for transmitting FMCW RF signals depending on the corresponding angle *ϕ*2, *ϕ*3, *ϕ*4.

For example, a 10 degree angle *ϕ*1, *ϕ*2, *ϕ*3, *ϕ*4 between the transmission T1, T2, T3, T4 of the radar transceiver 202a, 204a, 206a 208a and the North direction N, the processing circuit 202c, 204c, 206c, 208c may assign a sub-band centered around 79 GHz to the corresponding radar transceiver 202a, 204a, 206a, 208a for transmission. For a 100 degree angle *ϕ*1, *ϕ*2, *ϕ*3, *ϕ*4, the processing circuit 202c, 204c, 206c, 208c may assign a sub-band centered around 80 GHz frequency to the corresponding radar transceiver 202a, 204a, 206a, 208a for transmission.

In the above a new concept has been introduced to operate a radar sensor having a radar transceiver in a vehicle. The radar sensor determines an orientation of the transmission of the radar transceiver within the radar sensor with respect to a reference system and can autonomously assign a frequency sub-band to the radar transceiver for transmitting RF signals. The determination of the orientation of the transmission of the radar transceiver with respect to the reference system and assigning the frequency sub-band is completely performed within the radar sensor. Distinguished from conventional concepts, this autonomous concept enables an integrator (for example a car manufacturer) to integrate the radar sensor in a vehicle without taking care of information with respect to the location and direction of the respective radar sensor relative to the vehicle. This allows an easy integration and reduces efforts for car manufacturers. Furthermore, it allows an easy aftermarket installation or replacement of radar sensors using the described concept for avoiding interference. Furthermore, a time interval between the determination of the orientation of the transmission of the radar transceiver and assigning the frequency sub-band is either significantly reduced or almost negligible. When a route of the vehicle has sudden or frequent turns, the radar sensor can instantly switch the frequency sub-band as the orientation of the transmission of the radar transceiver changes. When such multiple radar sensors are implemented in the vehicle, they operate independently. If one radar sensor malfunctions, the malfunctioned radar sensor can be replaced without replacing the rest of the radar sensors in the vehicle. The new concept can be easily implemented using existing radar sensors.

Figures 4 to 6 illustrate other examples of radar sensors that can be implemented in the vehicle 210 of Figure 2. The radar sensors 400, 500 and 600 may include some or all features of the radar sensor of Figure 3 and will be described in regard of differences only.

The radar sensor 400 shown in Figure 4 has the radar transceiver 202a, the processing circuit 202c and the sensor 202b integrated in a same semiconductor radar package 402. The sensor 202b can in one example be implemented on a same die as the radar transceiver 202a using monolithic integration techniques for MEMS sensors or magnetic sensors. In one example, the sensor 202b can be on a separate die which is integrated with the radar transceiver 202a in a same semiconductor radar package 402 using for example multi-chip packages. The integration of the sensor 202b in the semiconductor radar package 402 allows a very compact integration of the sensor 202b. Furthermore, it releases the customers from any integration efforts of the sensor 202b.

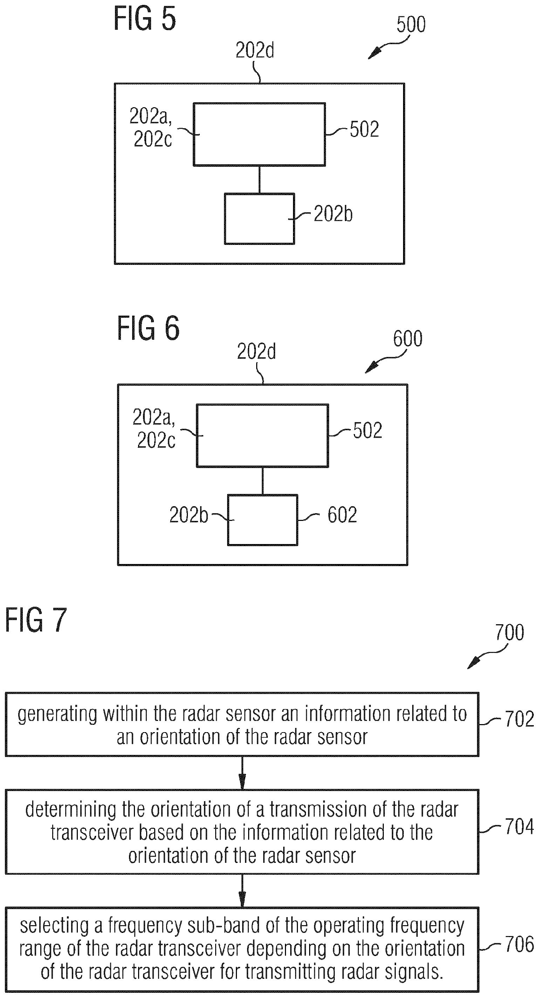

The radar sensor 500 shown in Figure 5 has the radar transceiver 202a and the processing circuit 202c integrated in a same semiconductor radar package 502 and the sensor 202b is arranged outside of the semiconductor radar package 502. The semiconductor radar package 502 and the sensor 202b are mounted on the same printed circuit board 202d. The example of Figure 5 allows an easy manufacturing of the components and easy integration on the printed circuit board 202d however requires a redesign of the printed circuit board 202d of the radar sensor 500 in order to enable a transfer of the sensor signals from the sensor 202b.

The radar sensor 600 shown in Figure 6 further comprises a power management chip 602 coupled to the semiconductor radar package 502 and mounted on the printed circuit board 202d. In this example, the sensor 202b is integrated in the power management chip 602. As a further example, the sensor 202b can also be integrated in a package of the power management chip 602 using a multi-chip package. Integration into the power management chip 602 or the package of the power management chip 602 may be easier than integration into the radar transceiver 202a or in the semiconductor radar package 402 as a multi-chip package.

Figure 7 shows a flowchart for a method of operating a radar sensor in a vehicle. The radar sensor comprises a radar transceiver operating in an operating frequency range. In Step 702 of the method 700, an information related to an orientation of the radar sensor is generated within the radar sensor. In a further step 704, an orientation of a transmission of the radar transceiver based on the information related to the orientation of the radar sensor is determined. In a further step 706, a frequency sub-band of the operating frequency range of the radar transceiver is selected depending on the orientation of the radar transceiver for transmitting radar signals.

In addition to the above examples, the following examples:
Example 1 discloses a method for operating a radar sensor in a vehicle, the radar sensor comprising a radar transceiver operating in an operating frequency range, the method comprising:
   generating within the radar sensor an information related to an orientation of the radar sensor,
   determining an orientation of a transmission of the radar transceiver based on the information related to the orientation of the radar sensor,
   selecting a frequency sub-band of the operating frequency range of the radar transceiver depending on the orientation of the radar transceiver for transmitting radar signals.
Example 2 discloses the method according to example 1, wherein generating the information related to the orientation of the radar sensor comprises generating the information related to the orientation of the radar sensor using a compass sensor integrated in the radar sensor.
Example 3 discloses the method according to example 1 or 2, wherein determining the orientation of the radar transceiver comprises determining the orientation of the radar transceiver with respect to a reference system.
Example 4 discloses the method according to example 3, wherein determining the orientation of the radar transceiver comprises using an orientation of a main transmission lobe of the radar transceiver with respect to the radar sensor.
Example 5 discloses the method according to examples 1 to 4, wherein assigning the frequency sub-band of the operating frequency range of the radar transceiver to the radar transceiver comprises assigning the frequency sub-band of the operating frequency range of the radar transceiver to the radar transceiver based on a pre-determined information stored in a memory of the radar sensor.
Example 6 discloses the method according to example 5, wherein the pre-determined information stored in the memory of the radar sensor comprises a look-up table or a programmable software etc...
Example 7 discloses the method according to any of the preceding examples, wherein the frequency sub-band includes a start frequency and a stop frequency or a bandwidth of a FMCW signal transmitted by the radar transceiver.
Example 8 discloses the method according to any of the preceding examples, wherein determining the orientation of the radar transceiver and selecting the frequency sub-band of the operating frequency range of the radar transceiver are performed within the radar sensor.
Example 9 discloses a radar sensor for a vehicle comprising:
   a radar transceiver operating in an operating frequency range,
   a sensor configured to determine an information related to an orientation of the radar sensor,
   a processing circuit configured to determine an orientation of a transmission of the radar transceiver based on the information related to the orientation of the radar sensor and to assign a frequency sub-band of the operating frequency range of the radar transceiver to the radar transceiver based on the information related to the orientation of the transmission of the radar sensor received from the sensor,
   a printed circuit board mechanically and electrically coupled to the radar transceiver, the sensor and the processing circuit.
Example 10 discloses the radar sensor according to example 9, wherein the sensor is configured to determine the information related to the orientation of the radar transceiver with respect to a reference system.
Example 11 discloses the radar sensor according to example 10, wherein the information related to the orientation of the radar transceiver with respect to the reference system comprises information related to an orientation of a main transmission lobe of the radar transceiver.
Example 12 discloses the radar sensor according to examples 9 to 11, wherein the radar transceiver, the sensor and the processing circuit are integrated in a same semiconductor radar package.
Example 13 discloses the radar sensor according to examples 9 to 11, wherein the radar transceiver and the processing circuit are integrated in a same semiconductor radar package and the sensor is arranged outside of the semiconductor radar package.
Example 14 discloses the radar sensor according to example 13, further comprising a power management chip coupled to the semiconductor radar package and mounted on the printed circuit board, and wherein the sensor is integrated in the power management chip.
Example 15 discloses the radar sensor according to examples 9 to 11, wherein the radar transceiver is integrated in a first semiconductor radar package, wherein the processing circuit is integrated in a second semiconductor radar package and, wherein the sensor is integrated in a third semiconductor radar package.
Example 16 discloses the radar sensor according to examples 9 to 15, wherein the sensor is at least one of a magnetic sensor or a MEMS compass sensor.
Example 17 discloses a vehicle comprising:
   a plurality of radar sensors according to examples 9-16,
   wherein the processing circuit of each radar sensor of the plurality of radar sensors autonomously assign a corresponding frequency sub-band of the operating frequency range of the plurality of radar transceivers to the corresponding radar transceiver based on the information related to the orientation of the corresponding radar transceiver.

## Claims

1. A method for operating a radar sensor in a vehicle, the radar sensor comprising a radar transceiver operating in an operating frequency range, the method comprising:
- generating within the radar sensor an information related to an orientation of the radar sensor,
- determining an orientation of a transmission of the radar transceiver based on the information related to the orientation of the radar sensor,
- selecting a frequency sub-band of the operating frequency range of the radar transceiver depending on the orientation of the radar transceiver for transmitting radar signals.

2. The method according to claim 1, wherein generating the information related to the orientation of the radar sensor comprises generating the information related to the orientation of the radar sensor using a compass sensor integrated in the radar sensor.

3. The method according to claim 1 or 2, wherein determining the orientation of the radar transceiver comprises determining the orientation of the radar transceiver with respect to a reference system.

4. The method according to claim 3, wherein determining the orientation of the radar transceiver comprises using an orientation of a main transmission lobe of the radar transceiver with respect to the radar sensor.

5. The method according to claims 1 to 4, wherein assigning the frequency sub-band of the operating frequency range of the radar transceiver to the radar transceiver comprises assigning the frequency sub-band of the operating frequency range of the radar transceiver to the radar transceiver based on a pre-determined information stored in a memory of the radar sensor.

6. The method according to claim 5, wherein the pre-determined information stored in the memory of the radar sensor comprises a look-up table or a programmable software etc...

7. The method according to any of the preceding claims, wherein the frequency sub-band includes a start frequency and a stop frequency or a bandwidth of a FMCW signal transmitted by the radar transceiver.

8. The method according to any of the preceding claims, wherein determining the orientation of the radar transceiver and selecting the frequency sub-band of the operating frequency range of the radar transceiver are performed within the radar sensor.

9. A radar sensor (202, 204, 206, 208, 400, 500, 600) for a vehicle comprising:
- a radar transceiver (202a, 204a, 206a, 208a) operating in an operating frequency range,
- a sensor (202b, 204b, 206b, 208b) configured to determine an information related to an orientation of the radar sensor (202, 204, 206, 208, 400, 500, 600),
- a processing circuit (202c, 204c, 206c, 208c) configured to determine the orientation of a transmission (T1, T2, T3, T4) of the radar transceiver (202a, 204a, 206a, 208a) based on the information related to the orientation of the radar sensor (202, 204, 206, 208, 400, 500, 600) and to assign a frequency sub-band of the operating frequency range of the radar transceiver (202a, 204a, 206a, 208a) to the radar transceiver (202a, 204a, 206a, 208a) based on the information related to the orientation of the transmission (T1, T2, T3, T4) of the radar sensor (202, 204, 206, 208, 400, 500, 600) received from the sensor (202b, 204b, 206b, 208b),
- a printed circuit board (202d, 204d, 206d, 208d) mechanically and electrically coupled to the radar transceiver (202a, 204a, 206a, 208a) the sensor (202b, 204b, 206b, 208b) and the processing circuit (202c, 204c, 206c, 208c).

10. The radar sensor (202, 204, 206, 208, 400, 500, 600) according to claim 9, wherein the sensor (202b, 204b, 206b, 208b) is configured to determine the information related to the orientation of the radar transceiver (202a, 204a, 206a, 208a) with respect to a reference system.

11. The radar sensor (202, 204, 206, 208, 400, 500, 600) according to claim 10, wherein the information related to the orientation of the radar transceiver (202a, 204a, 206a, 208a) with respect to the reference system comprises information related to an orientation of a main transmission lobe of the radar transceiver (202a, 204a, 206a, 208a).

12. The radar sensor (400) according to claims 9 to 11, wherein the radar transceiver (202a, 204a, 206a, 208a), the sensor (202b, 204b, 206b, 208b) and the processing circuit (202c, 204c, 206c, 208c) are integrated in a same semiconductor radar package (402).

13. The radar sensor (500) according to claims 9 to 11, wherein the radar transceiver (202a, 204a, 206a, 208a) and the processing circuit (202c, 204c, 206c, 208c) are integrated in a same semiconductor radar package (502) and the sensor (202b, 204b, 206b, 208b) is arranged outside of the semiconductor radar package (502).

14. The radar sensor (600) according to claim 13, further comprising a power management chip (602) coupled to the semiconductor radar package (502) and mounted on the printed circuit board (202d, 204d, 206d, 208d), and wherein the sensor (202b, 204b, 206b, 208b) is integrated in the power management chip (602).

15. The radar sensor (202, 204, 206, 208) according to claims 9 to 11, wherein the radar transceiver (202a, 204a, 206a, 208a) is integrated in a first semiconductor radar package, wherein the processing circuit (202c, 204c, 206c, 208c) is integrated in a second semiconductor radar package and, wherein the sensor (202b, 204b, 206b, 208b) is integrated in a third semiconductor radar package.

16. The radar sensor (202, 204, 206, 208, 400, 500, 600) according to claims 9 to 15, wherein the sensor (202b, 204b, 206b, 208b) is at least one of a magnetic sensor or a MEMS compass sensor.

17. A vehicle (210) comprising:
- a plurality of radar sensors (202, 204, 206, 208, 400, 500, 600) according to claims 9-16,
wherein the processing circuit (202c, 204c, 206c, 208c) of each radar sensor (202, 204, 206, 208, 400, 500, 600) of the plurality of radar sensor (202, 204, 206, 208, 400, 500, 600) s autonomously assign a corresponding frequency sub-band of the operating frequency range of the plurality of radar transceivers (202a, 204a, 206a, 208a) to the corresponding radar transceiver (202a, 204a, 206a, 208a) based on the information related to the orientation of the corresponding radar transceiver (202a, 204a, 206a, 208a).
